# EUROPÄISCHE PATENTSCHRIFT

(11) **EP 2 142 409 B1**
(45) Veröffentlichungstag und Bekanntmachung des Hinweises auf die Patenterteilung: **02.10.2013**
(21) Anmeldenummer: 08749540.4
(22) Anmeldetag: 11.04.2008
(51) Int. Cl.: B61D 17/04, F16B 37/04

(54) **BEFESTIGUNGSEINRICHTUNG ZUR AUSBILDUNG EINER SCHNITTSTELLE VON EINEM ROHBAU ZU EINEM INNENAUSBAU BEI EINEM SCHIENENFAHRZEUG**
FASTENING DEVICE FOR FORMING AN INTERFACE BETWEEN A SHELL AND INTERIOR FITTINGS OF A RAIL VEHICLE
DISPOSITIF DE FIXATION PERMETTANT DE REALISER LA JONCTION D'UNE CARROSSERIE A UN AMENAGEMENT INTERIEUR POUR UN VEHICULE SUR RAIL

(30) Priorität: 09.05.2007 DE 102007021747
(43) Veröffentlichungstag der Anmeldung: 13.01.2010
(73) Patentinhaber: Siemens Aktiengesellschaft, 80333 München (DE)
(72) Erfinder: WANCZURA, Stefan, 45665 Recklinghausen (DE); NOLTING, Gerhard, 44869 Bochum (DE)
(86) Internationale Anmeldenummer: PCT/EP2008/054397
(87) Internationale Veröffentlichungsnummer: WO 2008/138696

(56) Entgegenhaltungen:
- EP-A- 0 837 256
- WO-A-2007/008060
- FR-A- 2 730 771

## Beschreibung

Die Erfindung bezieht sich auf eine Befestigungseinrichtung zur Ausbildung einer Schnittstelle von einem Rohbau zu einem Innenausbau eines Schienenfahrzeugs, mit einem Käfig, der zur Befestigung an einer Unterstruktur ausgebildet ist und mit wenigstens einer Mutter, die zur Einfügung in den Käfig durch eine Öffnung desselben bemessen und in dem Käfig längs verschieblich gehalten ist.

Beispiele derartiger Befestigungseinrichtungen ergeben sich aus der FR 2 730 771 A und der EP 0 837 256 A. Dabei offenbart die FR 2 730 771 A eine zweiteilige Befestigungseinrichtung zur Fixierung einer Mutter, und zwar in einem Winkelstück. Eine federnde Lagerung der Mutter wird indirekt dadurch herbeigeführt, dass ein Klemmbügel des Winkelstücks sich federnd auf einer Wand abstützt. Eine alternative, ebenfalls indirekt federnde Fixierung einer Mutter ergibt sich aus der EP 0 837 256 A, nach deren Befestigungseinrichtung ein Bauteil unmittelbar an einer Innenseite einer C-Schiene anliegt, so dass Kräfte zwischen diesen beiden Komponenten ungefedert übertragen werden.

Solche Befestigungseinrichtungen werden von ihrer Art her auch als Käfigmuttern bezeichnet. Sie dienen zum Erzeugen einer möglichst hochfesten Gewindebasis in relativ dünnwandigen Bauteilen, die über eine Schraubenverbindung miteinander verspannt werden und in der Regel nur von einer Seite zugänglich sind. Diese Schraubenverbindung soll zudem in der Lage sein, Toleranzen auszugleichen, die aus Bauteilungenauigkeiten resultieren. Die zu verspannenden Bauteile sollen direkt zur Anlage gebracht werden, um einen günstigen Kraftfluss zu erzielen und somit die großen Vorspannkräfte von hochfesten Schraubenverbindungen direkt in den Bauteil einzuleiten.

Kontaktflächen der Bauteile sollen groß dimensioniert sein, so dass zulässige Pressungen nicht überschritten werden. Ebenfalls ist von Bedeutung, möglichst wenige Trennfugen der zu verspannenden Bauteile vorzusehen.

Allgemein soll auf Fügeverfahren, wie Schweißen, wie beispielsweise bei Anschweißmuttern, verzichtet werden, da dies naturgemäß die Festigkeit des Mutternwerkstoffs begrenzt und somit nicht für hochfeste Schraubenverbindungen in Frage kommt.

Die zu schaffende Gewindebasis soll zudem im Reparaturfall leicht gegen ein neues Bauteil zu tauschen sein.

Um solchen Anforderungen zu genügen, eine Schnittstelle zwischen einem Rohbau und einem Innenausbau bei einem Schienenfahrzeug auszubilden, ist im Stand der Technik bisher folgendes bekannt. Da viele Fügetechniken im Markt etabliert sind, wobei viele Grundprinzipien und noch darüber hinausgehende Ausführungsvarianten vorhanden sind, sollen hier nur einige exemplarische Ausführungsformen von Befestigungseinrichtungen zu dem genannten Zweck vorgestellt werden:

Eine Anschweißmutter besitzt nur geringe Festigkeit, einen geringen Toleranzausgleich, einen hohen Anlagenaufwand, wobei sie nicht als reparaturfreundlich bezeichnet werden kann. Ebenfalls bekannt ist die Verwendung einer Blindnietmutter, die nur eine geringe Festigkeit aufweist, weil der Schaft beim Setzen mit verformt werden muss. Auch ist bei dieser Ausführungsform nur ein geringer Toleranzausgleich möglich.

Ebenfalls zu den genannten Zwecken verwendete Einpressmuttern weisen einen geringen Toleranzausgleich und einen hohen Anlagenaufwand zu ihrer Herstellung auf.

Ebenfalls möglich ist das Schneiden eines Gewindes in eine Unterstruktur zur Herstellung der Schnittstelle, wobei in diesem Fall häufig nur eine geringe Festigkeit des Werkstoffs der Unterstruktur, eine geringe Gewindehöhe und ein geringer Toleranzausgleich erwartet werden kann.

Ebenfalls bekannt ist der Einsatz von Käfigmuttern, beispielsweise des Typs KLIPKO, bei dem jedoch keine direkte Bauteilverspannung erzielt werden kann, da der Käfig mitverspannt wird, wodurch sich hohe punktuelle Flächenpressungen ergeben. Aus diesem Grund sind solche Käfigmuttern für hochfeste Verbindungen ungeeignet.

Auch die Verwendung von Klips-Muttern zeigt Nachteile insofern, dass sie nicht frei im Bauteil positionierbar sind, ein einzuhaltender Randabstand limitiert ist und der Käfig mitverspannt wird.

Der Einsatz normaler Muttern scheidet aus, da beidseitige Zugänglichkeit erforderlich ist.

Bei dem Einsatz von C-Schienen mit Nutensteinen ergeben sich die Nachteile, dass die Anfertigung von Sonderprofilen erforderlich erscheint und sich ein hoher Reparaturaufwand ergibt.

Ausgehend hiervon liegt der Erfindung die Aufgabe zugrunde, eine Befestigungseinrichtung der eingangs genannten Art derart weiterzuentwickeln, dass sich günstige Gebrauchseigenschaften, insbesondere auch Schwingungsdämpfungseigenschaften, ergeben.

Diese Aufgabe wird bei der eingangs genannten Befestigungseinrichtung dadurch gelöst, dass ein Fixiersystem für die Mutter gegenüber dem Käfig vorgesehen ist, welches eine federnde Lagerung der Mutter schafft.

Aufgrund dieser federnden Lagerung mit Hilfe des Fixiersystems ist eine Schwingungsdämpfung für die Befestigungseinrichtung realisiert, so dass sonst im Stand der Technik auftretendes Klappern im Betrieb des Schienenfahrzeugs wirksam vermindert werden kann. Im Anschluss daran kann mit Hilfe geeigneter Schraubverbindungen eine Verbindung von dem Rohbau zu dem Innenausbau vorgenommen werden. Beispiele für anzubauende Innenausbaukomponenten sind Gepäckträgerkonsolen, Tischkonsolen, Cantilever-Sitzträger.

Bevorzugt wird das Fixiersystem für die Mutter von wenigstens einer Blattfeder gebildet, welche die Mutter auf einer der Öffnung gegenüberliegenden Seite des Käfigs federnd abstützt. Wenn die Öffnung zur Einführung der Mutter in den Käfig auf einer Rohbau-Seite der Befestigungseinrichtung vorgesehen ist, kann die mindestens eine Blattfeder auf der Innenausbau-Seite der Befestigungseinrichtung vorgesehen sein.

Die mindestens eine Blattfeder ist bevorzugt an dem Käfig angeformt und somit integraler Bestandteil des Käfigs.

Für eine gleichmäßige federnde Lagerung der Mutter in dem Käfig ist es vorteilhaft, wenn zwei einander in Querrichtung des Käfigs gegenüberliegende Blattfedern zur Ausbildung eines Blattfederpaares vorgesehen sind.

Zur Aufnahme mehrerer Muttern in dem Käfig ist es bevorzugt, wenn in Längsrichtung des Käfigs wenigstens zwei hintereinander in einem Abstand zueinander angeordnete Blattfederpaare vorgesehen sind und in dem Käfig eine Anzahl Muttern gehalten ist, die der Anzahl an Blattfederpaaren entspricht. Da die Muttern sämtlich in den Käfig längs verschieblich sind, ergibt sich hinsichtlich ihrer Lage eine günstige Toleranz.

Es kann vorgesehen sein, dass ein Raum zwischen zwei einander gegenüberliegenden Blattfedern frei von Material ist. Dies gestattet es, eine Zugänglichkeit der Muttern von der Innenausbau-Seite der Befestigungseinrichtung her zu gewährleisten.

Bevorzugt weist das Fixiersystem für die Mutter eine Blattfeder auf, die im eingebauten Zustand der Mutter zwischen einem Bodenabschnitt des Käfigs und der Mutter wirkt.

Insofern übt die Blattfeder eine Rückstellkraft auf die Mutter aus, welche die Mutter in Richtung auf die Öffnung drückt, durch die sie in den Käfig eingeführt worden ist. Bevorzugt ist die Blattfeder aus nicht rostendem Federstahl hergestellt und aus einer entsprechenden Blechplatine durch Laserschneiden oder Stanzen gewonnen.

Dem Bodenabschnitt zugewandte Bereiche der Blattfeder können abgewinkelt sein. Solche abgewinkelten Endbereiche können insbesondere mit einer im Bodenabschnitt des Käfigs vorgesehenen Verzahnung zusammenwirken, so dass die Enden der Blattfeder einrastbar sind.

Zum Zentrieren der Blattfeder gegenüber der Mutter ist es bevorzugt, wenn die Blattfeder in ihrem mittleren Bereich eine mehreckige Ausnehmung und die Mutter auf ihrer dem Bodenabschnitt des Käfigs zugewandten Seite eine entsprechende Ausnehmung ausgebildeten Zentrieransatz aufweist.

Alternativ zu dem Fixiersystem mit Blattfeder kann das Fixiersystem eine in die Mutter eingelassene, mittels einer Feder vorgespannte Kugel aufweisen. Auch hierdurch wird eine Schwingungsdämpfende Lagerung der Mutter innerhalb des Käfigs verwirklicht. Dabei kann die Kugel in der Mutter durch verstemmen arretiert sein.

Zum Verriegeln der Mutter in dem Käfig kann die Mutter in Querrichtung des Käfigs eine Verzahnung aufweisen, welche mit einer Verzahnung des Käfigs auf seiner Seite, die die Öffnung enthält, zusammenwirkt.

Der Käfig kann abgewinkelte Stege aufweisen, die zum Einklipsen in die Unterstruktur ausgebildet sind.

Allgemein gestattet es die Erfindung, eine ein- oder auch mehrteilige Gewindebasis innerhalb eines Käfigs zu realisieren. Aufgrund der Verschieblichkeit der Mutter innerhalb des Käfigs ist ein großer Toleranzausgleich möglich. Vorteilhaft ist außerdem, dass der Käfig der Befestigungseinrichtung, anders als im Stand der Technik, nicht mit verspannt wird, und nur zur Lagefixierung der Muttern dient.

Bei vertikaler Einbaulage der Käfigmutter kann außerdem eine Lagefixierung der Mutter im Käfig durch die Federbelastung aufgrund der Blattfedern oder einer anderen geeigneten Federeinrichtung erfolgen.

Ausführungsbeispiele der Erfindung werden nachfolgend unter Bezugnahme auf die Zeichnungen noch näher erläutert. Es zeigen:
- Figur 1: eine auseinandergezogene, perspektivische Ansicht einer Befestigungseinrichtung in Kombination mit einer Halteschiene eines Schienenfahrzeug-Rohbaus,
- Figuren 2, 3, 4, 5, 6: weitere perspektivische Ansichten der Befestigungseinrichtung von Figur 1,
- Figuren 7, 8: jeweils eine perspektivische Ansicht der Befestigungseinrichtung allein mit Befestigungsmuttern in einer ersten Position,
- Figuren 9, 10: jeweils eine perspektivische Ansicht der Befestigungseinrichtung allein mit Befestigungsmuttern in einer zweiten Position.
- Figur 11: eine alternative Ausführungsform der Befestigungseinrichtung,
- Figur 12: eine weitere Ausführungsform der Befestigungseinrichtung.

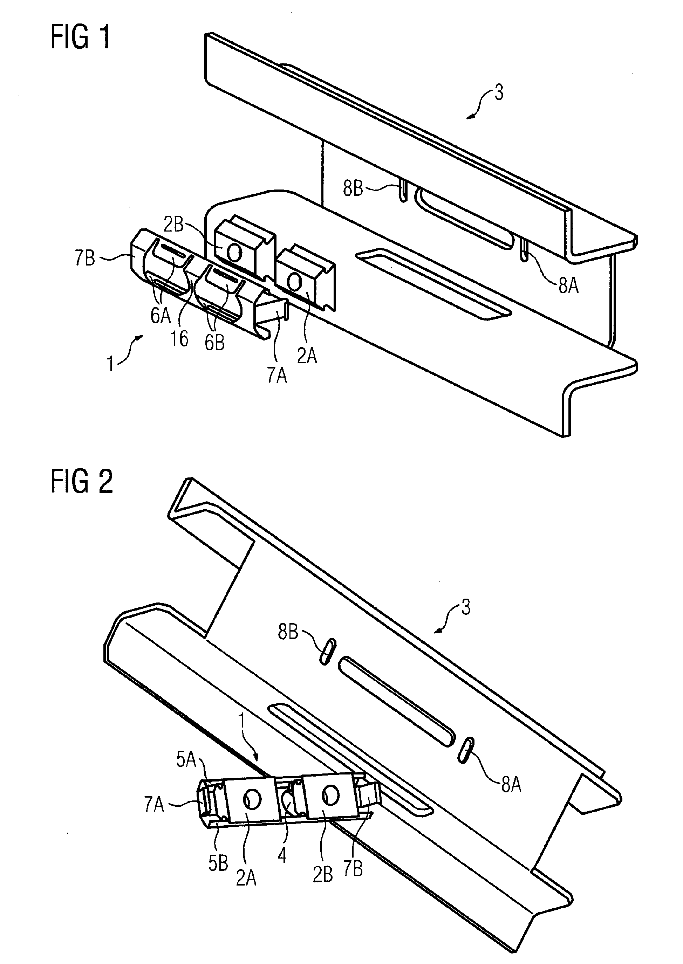

Die auseinandergezogene Ansicht von Figur 1 zeigt einen Käfig 1 aus Federstahl, zwei Befestigungsmuttern 2A, 2B, die in Kombination miteinander die hier vorgestellte Befestigungseinrichtung bilden. Diese Befestigungseinrichtung soll mit einer Halteschiene 3, die zum Rohbau eines Schienenfahrzeugs gehört, verbunden werden.

Zu diesem Zweck werden zunächst die beiden Befestigungsmuttern 2A, 2B in den Käfig 1 eingesetzt, wie in Figur 2 veranschaulicht ist. Dazu werden die beiden Befestigungsmuttern 2A, 2B durch eine an sie angepasst bemessene Öffnung 4 des Käfig 1 in denselben eingeführt. Dabei erstreckt sich die Öffnung 4 nahezu vollständig über eine Grundfläche des Käfigs 1. Die Öffnung 4 des Käfigs 1 wird in dessen Querrichtung von Raststegen 5A, 5B begrenzt, die sich im Wesentlichen über die Länge des Käfigs 1 erstrecken. Die Befestigungsmuttern 2A, 2B, weisen in Richtung einer Achse ihrer jeweiligen Gewindebohrungen eine besondere äußere Form auf. Von einer, der Halteschiene 3 zugewandten Stirnseite der Befestigungsmuttern 2A, 2B aus, verjüngt sich zunächst der Querschnitt der Befestigungsmuttern 2A, 2B, woran sich ein jeweiliger Rastabschnitt mit oberen abgewinkelten Querstegen der Befestigungsmuttern 2A, 2B anschließt, der mit den Raststegen 5A, 5B zusammenwirkt. In der Darstellung von Figur 2 befindet sich der Rastabschnitt innerhalb des Käfigs 1, während der verbleibende Abschnitt der Befestigungsmutter 2A, 2B außerhalb des Käfigs liegt.

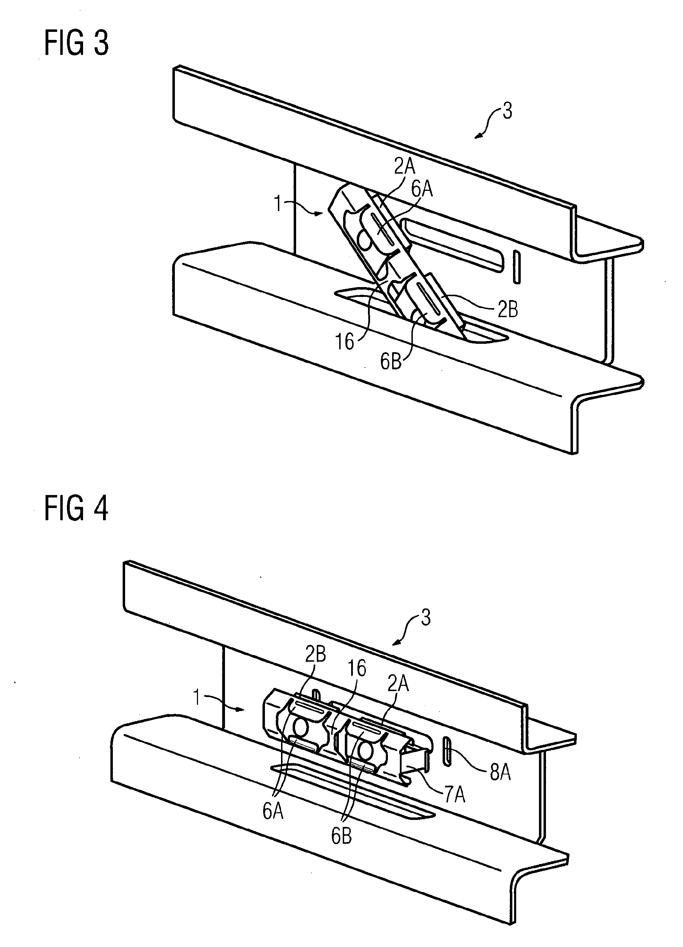

Wie aus Figur 3 hervor geht, kann die Befestigungseinrichtung durch eine seitliche Öffnung der Halteschiene in diese eingeführt und später eingesetzt werden (vgl. Figuren 4 bis 6). Jeder der zwei Befestigungsmuttern 2A, 2B ist ein Paar Blattfedern 6a, 6B zugeordnet, die integraler Bestandteil des Käfigs 1 sind. Die Blattfedern können noch als angeformte Zungen bezeichnet werden. Zwischen den Blattfedern 6A, 6B verläuft in Querrichtung des Käfigs 1 ein Stabilisierungssteg 16.

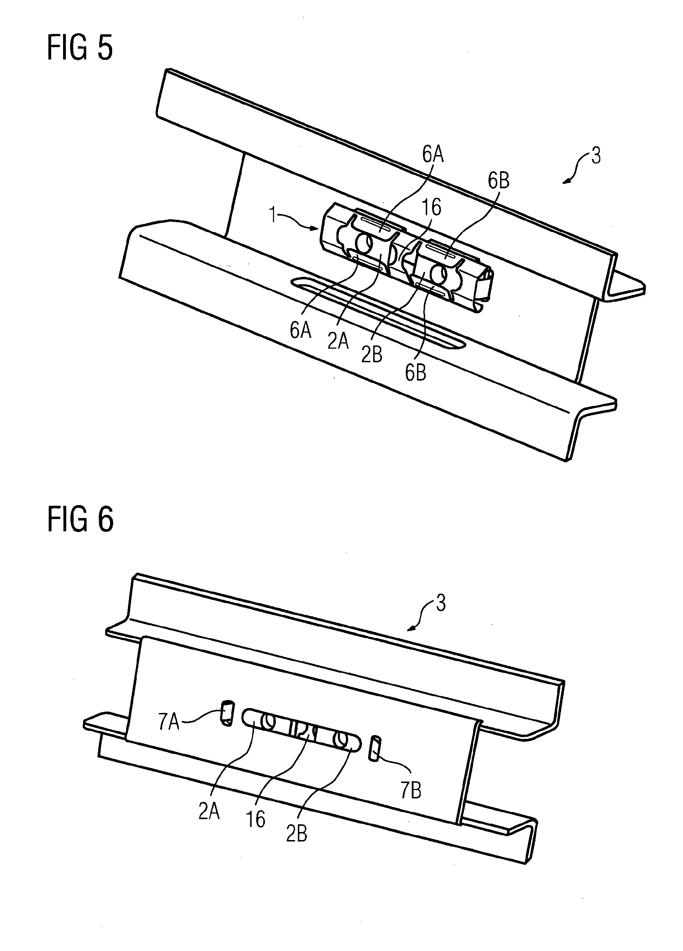

Der Käfig 1 weist außerdem seitlich angeordnete Klips-Stege 7A, 7B auf, die zu Eingreifen in zugeordnete Schlitze 8A, 8B der Halteschiene 3 ausgebildet sind. Die Figuren 5 und 6 zeigen den Käfig 1 mit darin enthaltenen Befestigungsmuttern 2A, 2B, eingeklipst in die Haltschiene 3. In den Darstellungen der Figuren 5 und 6 gelangen die Befestigungsmuttern 2A, 2B zur Anlage an der Halteschiene 3 und werden in Richtung auf die Blattfederpaare 6a, 6b gedrückt und somit Lagefixiert. Bei Belastung der Befestigungseinrichtung, wenn beispielsweise an den beiden Befestigungsmuttern 2A, 2B Innenausbauelemente angebracht sind, bewirken die Blattfederpaare 6A, 6B eine Abfederung der Befestigungsmuttern 2A, 2B, so dass etwaiges Klappern der Muttern 2A, 2B in dem Käfig 1 wirksam vermieden wird.

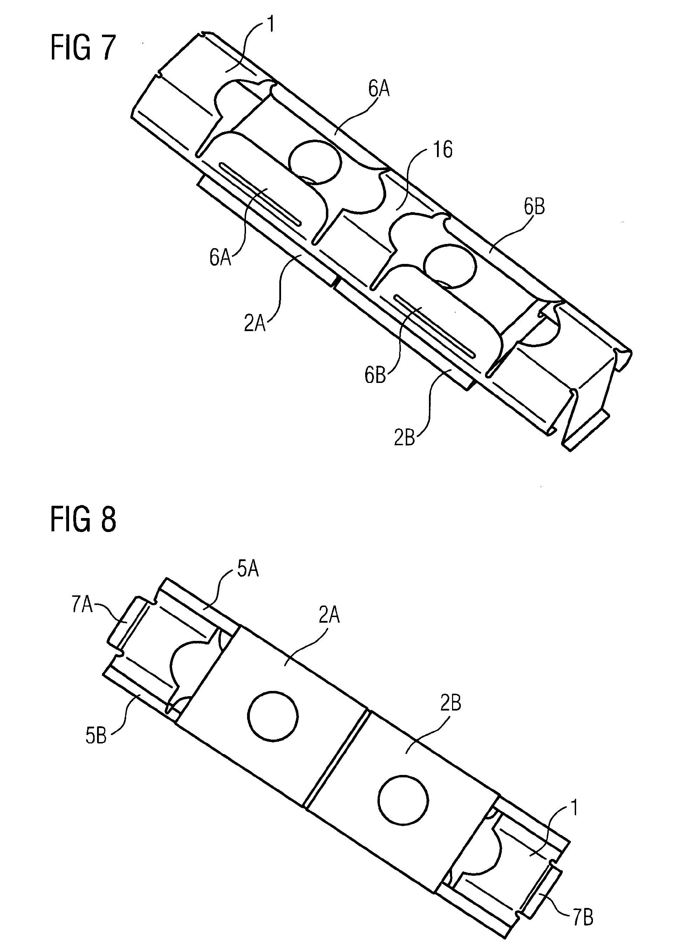

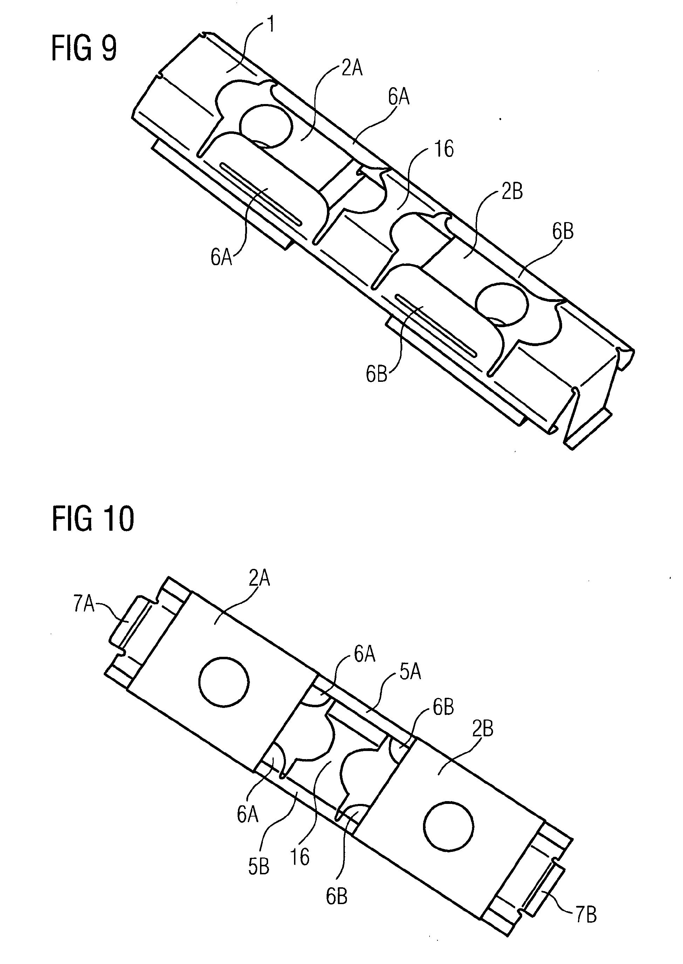

Die Darstellungen der Figuren 7 bis 10 zeigen, welche Toleranzen zur Anordnung der Befestigungsmuttern 2A, 2B in Längsrichtung des Käfigs 1 ermöglicht werden. So zeigen die Figuren 7 und 8 die beiden Befestigungsmuttern 2A, 2B unmittelbar aneinander anschließend, während in den Figuren 9 und 10 die beiden Befestigungsmuttern 2A, 2B einen maximalen Abstand voneinander auseinander liegen. Zwischen diesen beiden Extremlagen können die Befestigungsmuttern 2A, 2B jedwede Zwischenlage einnehmen.

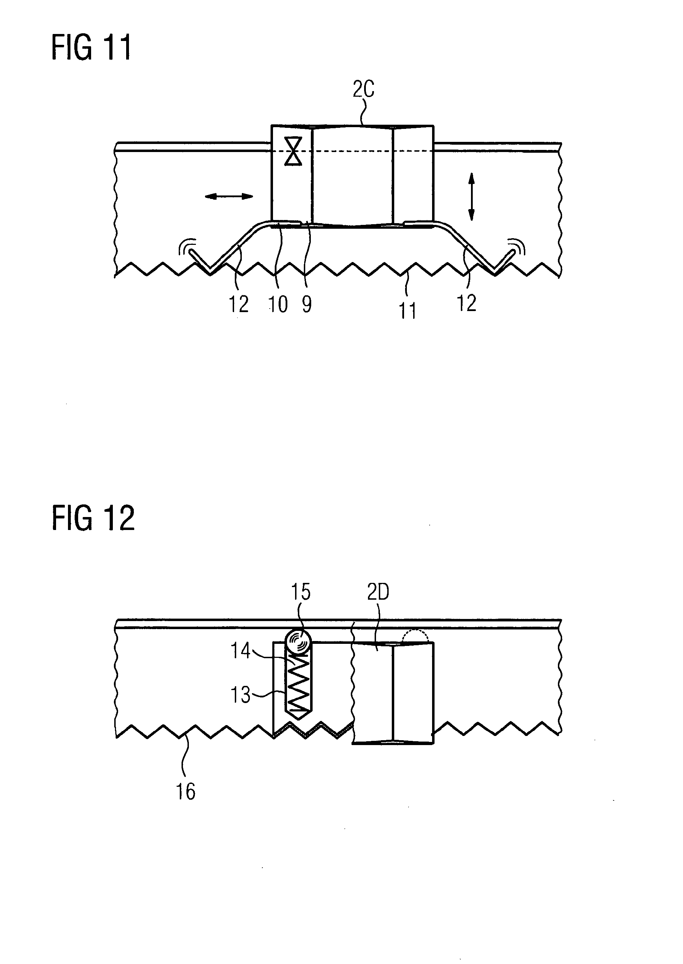

Die Darstellung von Figur 11 zeigt eine alternative Ausführungsform der Befestigungseinrichtung. Dabei weist eine Befestigungsmutter 2C einen Zentrieransatz 9 auf. Auf den Zentrieransatz 9 wird eine mit entsprechender Ausnehmung versehende Blattfedereinrichtung 10 aufgesteckt, die an ihren jeweiligen äußeren Enden von der Befestigungsmutter 2C weg in Richtung auf einen Boden 11 des Käfigs 1A verlaufende Schenkel 12 aufweist. Der Boden 11 des Käfigs 1A hat eine Verzahnung, in die abgewinkelte Enden der Schenkel 12 einrasten können. Dies dient zur Lagefixierung der Befestigungsmutter 2C innerhalb des Käfigs 1A.

Figur 12 zeigt eine weitere Ausführungsform der Befestigungseinrichtung, bei der eine andere Art der federnden Lagerung einer Befestigungsmutter 2D zum Einsatz kommt. Der hier gewählte Federmechanismus wird gebildet aus einer senkrecht zu einem Boden eines Käfigs 1C verlaufenden Bohrung 13, innerhalb der eine Schraubenfeder 14 angeordnet ist, welche eine Kugel 15 in Richtung auf die dem Boden 16 gegenüberliegende Seite des Käfigs 1C vorspannt.

Bei dieser Ausführungsform ist ebenfalls eine Verzahnung des Bodens 16 vorgesehen, in die eine entsprechend geformte Bodenseite der Befestigungsmutter 2D eingreift.

Jede der dargestellten Muttern 2A, 2B, 2C, 2D kann auch als Mehrfachmutter ausgebildet sein.

## Patentansprüche

1. Befestigungseinrichtung zur Ausbildung einer Schnittstelle von einem Rohbau zu einem Innenausbau eines
Schienenfahrzeugs,
mit einem Käfig (1), der zur Befestigung an einer Unterstruktur ausgebildet ist, und
mit wenigstens einer Mutter (2A, 2B, 2C, 2D), die zur Einfügung in den Käfig (1) durch eine Öffnung (4) desselben bemessen und in dem Käfig (1) längs verschieblich gehalten ist,
**dadurch gekennzeichnet, dass**
ein Fixiersystem für die Mutter (2A, 2B, 2C, 2D) gegenüber dem Käfig vorgesehen ist, welches eine federnde Lagerung der Mutter (2A, 2B, 2C, 2D) schafft.

2. Befestigungseinrichtung nach Anspruch 1,
**dadurch gekennzeichnet, dass**
das Fixiersystem für die Mutter (2A) von wenigstens einer Blattfeder (6A, 6B) gebildet wird, welche die Mutter (2A) auf einer der Öffnung (4) gegenüberliegenden Seite des Käfigs (1) federnd abstützt.

3. Befestigungseinrichtung nach Anspruch 2,
**dadurch gekennzeichnet, dass**
die mindestens eine Blattfeder (6A, 6B) an dem Käfig (1) angeformt ist.

4. Befestigungseinrichtung nach einem der Ansprüche 2 oder 3,
**dadurch gekennzeichnet, dass**
zwei einander in Querrichtung des Käfigs (1) gegenüberliegende Blattfedern (6A, 6B) zur Ausbildung eines Blattfederpaars (6A, 6B) vorgesehen sind.

5. Befestigungseinrichtung nach Anspruch 4,
**dadurch gekennzeichnet, dass**
in Längsrichtung des Käfigs (1) wenigstens zwei hintereinander in einem Abstand zueinander angeordnete Blattfederpaare (6A, 6B) vorgesehen sind und in dem Käfig (1) eine Anzahl Muttern (2A, 2B) gehalten ist, die der Anzahl an Blattfederpaaren (6A, 6B) entspricht.

6. Befestigungseinrichtung nach einem der Ansprüche 4 oder 5,
**dadurch gekennzeichnet, dass**
ein Raum zwischen zwei einander gegenüberliegenden Blattfedern (6A, 6B) frei von Material ist.

7. Befestigungseinrichtung nach Anspruch 1,
**dadurch gekennzeichnet, dass**
das Fixiersystem für die Mutter (2A, 2B, 2C, 2D) eine Blattfeder (10) aufweist, die im eingebauten Zustand der Mutter (2A, 2B, 2C, 2D) zwischen einem Bodenabschnitt (11) des Käfigs (1) und der Mutter (2C) wirkt.

8. Befestigungseinrichtung nach einem der Ansprüche 2 bis 7,
**dadurch gekennzeichnet, dass**
die Blattfeder (10) aus nicht rostendem Federstahl hergestellt ist.

9. Befestigungseinrichtung nach einem der Ansprüche 2 bis 8,
**dadurch gekennzeichnet, dass**
die Blattfeder (10) aus einer Blechplatine durch Laserschneiden oder Stanzen hergestellt ist.

10. Befestigungseinrichtung nach einem der Ansprüche 7 bis 9,
**dadurch gekennzeichnet, dass**
dem Bodenabschnitt (11) zugewandte Bereiche der Blattfeder (10) abgewinkelt sind.

11. Befestigungseinrichtung nach einem der Ansprüche 7 bis 10,
**dadurch gekennzeichnet, dass**
der Bodenabschnitt (11) des Käfigs (1) eine Verzahnung aufweist, in die Enden der Blattfeder (10) einrastbar sind.

12. Befestigungseinrichtung nach einem der Ansprüche 7 bis 11,
**dadurch gekennzeichnet, dass**
die Blattfeder (10) in ihrem mittleren Bereich eine mehreckige Ausnehmung und die Mutter (2C) auf ihrer dem Bodenabschnitt (11) des Käfigs (1) zugewandten Seite einen entsprechend der Ausnehmung ausgebildeten Zentrieransatz (9) aufweist.

13. Befestigungseinrichtung nach Anspruch 1,
**dadurch gekennzeichnet, dass**
das Fixiersystem eine in die Mutter (2D) eingelassene, mittels einer Feder (14) vorgespannte Kugel (15) aufweist.

14. Befestigungseinrichtung nach Anspruch 13,
**dadurch gekennzeichnet, dass**
die Kugel (15) in der Mutter (2D) durch Verstemmen arretiert ist.

15. Befestigungseinrichtung nach einem der Ansprüche 13 oder 14,
**dadurch gekennzeichnet, dass**
die Mutter (2D) in Querrichtung des Käfigs (1) eine Verzahnung aufweist, in der sie verriegelbar ist.

16. Befestigungseinrichtung nach einem der Ansprüche 1 bis 15,
**dadurch gekennzeichnet, dass**
der Käfig (1) abgewinkelte Stege (7A, 7B) aufweist, die zum Einklipsen in die Unterstruktur ausgebildet sind.

17. Befestigungseinrichtung nach einem der Ansprüche 1 bis 16,
**dadurch gekennzeichnet, dass**
die Mutter (2A, 2B) zum Einklipsen in den Käfig (1) konisch ausgebildet ist.

18. Befestigungseinrichtung nach einem der Ansprüche 1 bis 17,
**dadurch gekennzeichnet, dass**
der Käfig (1) aus einem nicht rostenden Federstahl hergestellt ist.

19. Befestigungseinrichtung nach Anspruch 18,
**dadurch gekennzeichnet, dass**
der Käfig (1) aus einer Blechplatine durch Laserschneiden oder Stanzen herstellbar ist.

20. Befestigungseinrichtung nach einem der Ansprüche 1 bis 19,
**dadurch gekennzeichnet, dass**
die Mutter (2A, 2B) obere, abgewinkelte Querstege zu deren Höhenfixierung aufweist.

21. Befestigungseinrichtung nach einem der Ansprüche 1 bis 20,
**dadurch gekennzeichnet, dass**
der Käfig (1) so bemessen ist, dass sich die Mutter (2A, 2B, 2C, 2D) innerhalb des Käfigs (1) zum Schaffen eines Toleranzausgleichs verschieben lässt.

22. Befestigungseinrichtung nach einem der Ansprüche 1 bis 21,
**dadurch gekennzeichnet, dass**
die Mutter (2A, 2B, 2C, 2D) als Mehrfach-Mutter ausgeführt ist.

23. Befestigungseinrichtung nach einem der Ansprüche 1 bis 22,
**dadurch gekennzeichnet, dass**
der Käfig (1) zur Aufnahme wenigstens einer zu der Mutter (2A, 2B, 2C, 2D) gleichartigen zweiten Mutter (2A, 2B, 2C, 2D) bemessen ist, wobei für jede der Muttern (2A, 2B, 2C, 2D) ein Toleranzausgleich ermöglicht ist.

## Claims

1. Fastening device for forming an interface between a shell and interior fittings of a rail vehicle, with a cage (1) which is designed for fastening to a substructure, and with at least one nut (2A, 2B, 2C, 2D) which is dimensioned for fitting into the cage (1) through an opening (4) in same and is held in a longitudinally displaceable manner in the cage (1), **characterized in that** a fixing system for the nut (2A, 2B, 2C, 2D) in relation to the cage is provided, the fixing system providing a resilient mounting of the nut (2A, 2B, 2C, 2D).

2. Fastening device according to Claim 1, **characterized in that** the fixing system for the nut (2A) is formed by at least one leaf spring (6A, 6B) which resiliently supports the nut (2A) on a side of the cage (1) opposite the opening (4).

3. Fastening device according to Claim 2, **characterized in that** the at least one leaf spring (6A, 6B) is integrally formed on the cage (1).

4. Fastening device according to either of Claims 2 and 3, **characterized in that** two leaf springs (6A, 6B) which are opposite each other in the transverse direction of the cage (1) are provided for forming a pair of leaf springs (6A, 6B).

5. Fastening device according to Claim 4, **characterized in that** at least two pairs of leaf springs (6A, 6B) arranged one behind another at a distance from each other are provided in the longitudinal direction of the cage (1), and a number of nuts (2A, 2B) corresponding to the number of pairs of leaf springs (6A, 6B) is held in the cage (1).

6. Fastening device according to either of Claims 4 and 5, **characterized in that** a space between two mutually opposite leaf springs (6A, 6B) is free of material.

7. Fastening device according to Claim 1, **characterized in that** the fixing system for the nut (2A, 2B, 2C, 2D) has a leaf spring (10) which, in the fitted state of the nut (2A, 2B, 2C, 2D), acts between a base section (11) of the cage (1) and the nut (2C).

8. Fastening device according to one of Claims 2 to 7, **characterized in that** the leaf spring (10) is produced from stainless spring steel.

9. Fastening device according to one of Claims 2 to 8, **characterized in that** the leaf spring (10) is produced from a sheet steel billet by laser cutting or punching.

10. Fastening device according to one of Claims 7 to 9, **characterized in that** regions of the leaf spring (10) that face the base section (11) are angled.

11. Fastening device according to one of Claims 7 to 10, **characterized in that** the base section (11) of the cage (1) has a toothing into which ends of the leaf spring (10) are latchable.

12. Fastening device according to one of Claims 7 to 11, **characterized in that** the central region of the leaf spring (10) has a polygonal recess, and that side of the nut (2C) which faces the base section (11) of the cage (1) has a centring extension (9) formed in a manner corresponding to the recess.

13. Fastening device according to Claim 1, **characterized in that** the fixing system has a ball (15) which is let into the nut (2D) and is prestressed by means of a spring (14).

14. Fastening device according to Claim 13, **characterized in that** the ball (15) is retained in the nut (2D) by calking.

15. Fastening device according to either of Claims 13 and 14, **characterized in that**, in the transverse direction of the cage (1), the nut (2D) has a toothing, in which said nut is lockable.

16. Fastening device according to one of Claims 1 to 15, **characterized in that** the cage (1) has angled webs (7A, 7B) which are designed for clipping into the substructure.

17. Fastening device according to one of Claims 1 to 16, **characterized in that** the nut (2A, 2B) is of conical design for clipping into the cage (1).

18. Fastening device according to one of Claims 1 to 17, **characterized in that** the cage (1) is produced from a stainless spring steel.

19. Fastening device according to Claim 18, **characterized in that** the cage (1) is producible from a sheet steel billet by laser cutting or punching.

20. Fastening device according to one of Claims 1 to 19, **characterized in that** the nut (2A, 2B) has upper, angled transverse webs for the vertical fixing thereof.

21. Fastening device according to one of Claims 1 to 20, **characterized in that** the cage (1) is dimensioned in such a manner that the nut (2A, 2B, 2C, 2D) can be displaced within the cage (1) in order to provide compensation for tolerances.

22. Fastening device according to one of Claims 1 to 21, **characterized in that** the nut (2A, 2B, 2C, 2D) is designed as a multiple nut.

23. Fastening device according to one of Claims 1 to 22, **characterized in that** the cage (1) is dimensioned for receiving at least one second nut (2A, 2B, 2C, 2D) which is identical to the nut (2A, 2B, 2C, 2D), wherein compensation of tolerances is made possible for each of the nuts (2A, 2B, 2C, 2D).

## Revendications

1. Dispositif de fixation pour la constitution d'une interface d'un chaudron à un aménagement intérieur d'un véhicule sur rail,
comprenant une cage ( 1 ), qui est constituée pour être fixée à une sous-structure, et
comprenant au moins un écrou ( 2A, 2b, 2C, 2D ), qui est dimensionné pour l'insertion dans la cage ( 1 ) par une ouverture ( 4 ) de celle-ci et pour être maintenu coulissant longitudinalement dans la cage ( 1 ),
**caractérisé en ce que**
il est prévu un système d'immobilisation de l'écrou ( 2A, 2b, 2C, 2D ) par rapport à la cage, qui ménage un montage élastique de l'écrou ( 2A, 2b, 2C, 2D ).

2. Dispositif de fixation suivant la revendication 1,
**caractérisé en ce que**
le système d'immobilisation de l'écrou ( 2A ) est formé d'au moins un ressort ( 6A, 6B ) à lame, qui soutient élastiquement l'écrou ( 2A ) d'un côté de la cage ( 1 ) opposé à l'ouverture ( 4 ).

3. Dispositif de fixation suivant la revendication 2,
**caractérisé en ce que**
le au moins un ressort ( 6A, 6B ) à lame est formé sur la cage ( 1 ).

4. Dispositif de fixation suivant l'une des revendications 2 ou 3,
**caractérisé en ce qu'**il est prévu deux ressorts ( 6A, 6B ) à lame opposés l'un à l'autre, dans la direction transversale de la cage ( 1 ) pour la constitution d'une paire ( 6A, 6B ) de ressorts à lame.

5. Dispositif de fixation suivant la revendication 4,
**caractérisé en ce qu'**il est prévu dans la direction longitudinale de la cage ( 1 ) au moins deux paires ( 6A, 6B ) de ressorts à lame montées les unes derrière les autres à distance entre elles et dans la cage ( 1 ) est retenu un nombre d'écrous ( 2A, 2B ), qui correspond au nombre des paires ( 6A, 6B ) de ressorts à lame.

6. Dispositif de fixation suivant l'une des revendications 4 ou 5,
**caractérisé en ce qu'**un espace entre deux ressorts ( 6A, 6B ) à lame opposé l'un à l'autre est exempt de matière.

7. Dispositif de fixation suivant la revendication 1,
**caractérisé en ce que** le système d'immobilisation des écrous ( 2A, 2B, 2C, 2D ) a un ressort ( 10 ) à lame, qui, à l'état monté de l'écrou ( 2A, 2b, 2C, 2D ), agit entre une partie ( 11 ) de fond de la cage ( 1 ) et l'écrou ( 2C ).

8. Dispositif de fixation suivant l'une des revendications 2 à 7,
**caractérisé en ce que** le ressort ( 10 ) à lame est en un acier pour ressort inoxydable.

9. Dispositif de fixation suivant l'une des revendications 2 à 8,
**caractérisé en ce que** le ressort ( 10 ) à lame est fabriqué dans une platine de tôle par découpe laser ou par estampage.

10. Dispositif de fixation suivant l'une des revendications 7 à 9,
**caractérisé en ce que** des parties du ressort ( 10 ) à lame tournées vers la partie ( 11 ) de fond sont coudées.

11. Dispositif de fixation suivant l'une des revendications 7 à 10,
**caractérisé en ce que** la partie ( 11 ) de fond de la cage ( 1 ) a une denture, dans laquelle les extrémités du ressort ( 10 ) à lame peuvent s'encliqueter.

12. Dispositif de fixation suivant l'une des revendications 7 à 11,
**caractérisé en ce que** le ressort ( 10 ) à lame a, dans sa partie médiane, un évidement polygonal et l'écrou ( 2C ) a sur son côté tourné vers la partie ( 11 ) de fond de la cage ( 1 ) un prolongement ( 9 ) de centrage constitué conformément à l'évidement.

13. Dispositif de fixation suivant la revendication 1,
**caractérisé en ce que** ce système d'immobilisation a une bille ( 15 ) encastrée dans l'écrou ( 2D ) et précontrainte au moyen d'un ressort ( 14 ).

14. Dispositif de fixation suivant la revendication 13,
**caractérisé en ce que** la bille ( 15 ) est bloquée dans l'écrou ( 2D ) par matage.

15. Dispositif de fixation suivant l'une des revendications 13 ou 14,
**caractérisé en ce que** l'écrou ( 2D ) a, dans la direction transversale de la cage ( 1 ), une denture dans laquelle il peut être verrouillé.

16. Dispositif de fixation suivant l'une des revendications 1 à 15,
**caractérisé en ce que** la cage ( 1 ) a des entretoises ( 7A, 7B ) coudées, qui sont constituées pour se clipser dans la sous-structure.

17. Dispositif de fixation suivant l'une des revendications 1 à 16,
**caractérisé en ce que** l'écrou ( 2A, 2B ) est constitué de manière conique pour se clipser dans la cage ( 1 ).

18. Dispositif de fixation suivant l'une des revendications 1 à 17,
**caractérisé en ce que** la cage ( 1 ) est en acier pour ressort inoxydable.

19. Dispositif de fixation suivant la revendication 18,
**caractérisé en ce que** la cage ( 1 ) est fabriquée dans une platine de tôle par découpe laser ou par estampage.

20. Dispositif de fixation suivant l'une des revendications 1 à 19,
**caractérisé en ce que** l'écrou ( 2A, 2B ) a des traverses supérieures coudées pour son immobilisation en hauteur.

21. Dispositif de fixation suivant l'une des revendications 1 à 20,
**caractérisé en ce que** la cage ( 1 ) a des dimensions telles, qu'elle permet à l'écrou ( 2A, 2B, 2C, 2D ) de coulisser à l'intérieur de la cage ( 1 ) pour ménager une compensation de tolérance.

22. Dispositif de fixation suivant l'une des revendications 1 à 21,
**caractérisé en ce que** l'écrou ( 2A, 2B, 2C, 2D ) est réalisé sous la forme d'un écrou multiple.

23. Dispositif de fixation suivant l'une des revendications 1 à 22,
**caractérisé en ce que** la cage ( 1 ) a des dimensions lui permettant de recevoir au moins un deuxième écrou ( 2A, 2B, 2C, 2D ) de même type que l'écrou ( 2A, 2B, 2C, 2D ), une compensation de tolérance étant rendue possible pour chacun des écrous ( 2A, 2B, 2C, 2D ).
